# EUROPEAN PATENT APPLICATION

(11) **EP 4 489 148 A1**
(43) Date of publication of application: **08.01.2025**
(21) Application number: 23290025.8
(22) Date of filing: 03.07.2023
(51) Int. Cl.: H01M 8/04089, A62C 3/08, B60L 50/72, H01M 8/04664, H01M 8/247

(54) **PERIPHERAL CONTROL FOR A FUEL CELL**

(71) Applicant: Airbus Operations GmbH, 21129 Hamburg (DE); Airbus Operations (S.A.S.), 31060 Toulouse Cedex 9 (FR)
(72) Inventor: Scharowsky, Thorsten, 21129 Hamburg (DE); Bretagnol, Bertrand, 31060 Toulouse Cedex 9 (FR)
(74) Representative: LKGLOBAL Lorenz & Kopf Patentanwalt Attorney at Law PartG mbB

(57) **Abstract**

The present invention relates to a leaking substance discharging device. In order to provide for a better controllable, more robust and efficient fuel cell arrangement, the device provides a housing (12) and a leakage collection fluid (14). The housing is configured to encapsulate at least one fuel cell (16). The housing encloses an intermediate space (18) at least partly surrounding the at least one fuel cell when arranged within the housing. The intermediate space is configured to receive the leakage collection fluid. The leakage collection fluid is configured to captivate leaking substance (20), which results in a segregation of leaked substance bubbles (22) in the leakage collection fluid. The intermediate space is also configured to collect the leaked substance bubbles and to prevent leaking of the leaked substance into a surrounding (24) of the housing.

## Description

### FIELD OF THE INVENTION

The present invention relates to a multifunctional safety housing for fuel cell; more specifically, the invention relates to a leaking substance discharging device, to a fuel cell arrangement, to an energy supply system, to an aircraft and to a method for discharging a leaking substance.

### BACKGROUND OF THE INVENTION

Fuel cells that convert chemical to electrical energy may be deployed to power a wide range of vehicle systems. These vehicle system may expose the fuel cell to a variety to harsh conditions that may lead to malfunctioning of the fuel cell and to leakage of the powering fluid even. In order to overcome these difficulties, several constructional measures may be deployed, like, e.g., ventilation systems or thicker fuel cell shells. However, these measures may lead to complex, heavy and bulky designs of the fuel cell and associated systems.

### SUMMARY OF THE INVENTION

There may thus be a need for a better controllable, more robust and efficient fuel cell arrangement.

The object of the present invention is solved by the subject-matter of the independent claims; further embodiments are incorporated in the dependent claims. It should be noted that the following described aspects of the invention apply also for the leaking substance discharging device, the fuel cell arrangement, the energy supply system, the aircraft and the method for discharging a leaking substance.

According to the present invention, a leaking substance discharging device for fuel cell operation is provided. The device comprises a housing and a leakage collection fluid. The housing is configured to encapsulate at least one fuel cell. The housing encloses an intermediate space at least partly surrounding the at least one fuel cell when arranged within the housing. The intermediate space is configured to receive the leakage collection fluid. The leakage collection fluid is configured to captivate leaking substance, which results in a segregation of leaked substance bubbles in the leakage collection fluid. The intermediate space is also configured to collect the leaked substance bubbles and to prevent leaking of the leaked substance into a surrounding of the housing.

As an advantage, the device is a passive system, no active components are required.

As a further advantage, the device is more reliable.

As an advantage, the device is potentially lighter than other solutions requiring a lot of peripheral equipment.

As an advantage, the device is more economic due to less components required.

As an advantage, the location of hydrogen accumulations can be controlled.

According to an example, the leakage collection fluid is a liquid configured to make the leaking substance locatable, detectable and controllable by forming the leaked substance bubbles. The liquid has a viscosity that allows the upwards oriented transit of the leaked substance bubbles in the intermediate space due to gravity.

According to an example, the housing provides a capturing unit configured to gather the leaked substance bubbles from the leakage collection fluid in order to collect the leaked substance from the fuel cell. As an option, the capturing unit is located at the highest point of the intermediate space with respect to the at least one fuel cell.

According to an example, the housing provides at least one temperature control element for cooling and/or heating. The at least one temperature control element is configured to heat and/or cool the at least one fuel cell via the leakage collection fluid.

According to the present invention, also a fuel cell arrangement is provided. The arrangement comprises at least one fuel cell, a leaking substance discharging device according to one of the previous examples. The leaking substance discharging device encloses the at least one fuel cell and captures leaking substance from the enclosed at least one fuel cell.

As an advantage, a thinner and lighter design of fuel cells can be provided.

As an advantage, a more energy efficient fuel cell can be provided.

According to the present invention, also an energy supply system is provided. The system comprises at least one fuel cell arrangement according to the previous example and a substance reservoir. The substance reservoir is connected to the at least one fuel cell arrangement via substance supplies. The substance supplies are connecting the substance reservoir to the at least one fuel cell arrangement to supply the substance to the at least one fuel cell arrangement. The at least one fuel cell arrangement is configured to provide electric energy to power consuming loads.

As an advantage, electric energy can be provided from chemical energy under a variety of extreme environmental conditions.

According to the present invention, also an aircraft is provided. The aircraft comprises at least one energy supply system according to the previous example and a propulsion system. The propulsion system is powered by the at least one energy supply system.

As an advantage, an aircraft operatable at various and extreme conditions is yielded.

According to the present invention, also a method for discharging a leaking substance is provided. The method comprises the following steps:
- Providing a housing;
- Providing a leakage collection fluid. The housing is configured to encapsulate at least one fuel cell; and
- Providing an intermediate space at least partly surrounding the at least one fuel cell when arranged within the housing by the housing. The intermediate space is configured to receive the leakage collection fluid. The leakage collection fluid is configured to captivate leaking substance, which results in a segregation of leaked substance bubbles in the leakage collection fluid. The intermediate space is configured to collect the leaked substance bubbles and to prevent leaking of the leaked substance into the surroundings of the housing.

According to an aspect, the surrounding of the fuel cell stacks are filled using a liquid. This liquid acts as a safety shielding for the stacks and the outside from hazardous effects. It covers most kinds of effects, such as mechanical, like vibration, impact, dust, or as chemical, like hydrogen leakage, fire, explosion or as electrical, like electric arcs. The liquid replaces a vacuum, airflow, inert gas or explosion proof housing.

According to an aspect, fuel cell stacks are enclosed with a housing and the gap between the fuel cell stacks is filled with liquid. These stacks have to be protected, as they are the core element of the propulsion system. On the other hand, the surrounding has to be protected from hydrogen leakages and high voltages. Therefore, it is foreseen to enclose the stacks and filling the gap with liquid to cover all the safety aspects with a passive system. This helps to protect the stack from dust as it absorbs the dust, vibrations, as they are damped by the liquid and provide some cooling at elevated temperature or acts as a temperature buffer at low temperatures. In the other direction, it absorbs hydrogen partially, collects the remaining gaseous hydrogen in a defined area and shields the surrounding against high voltages. With a passive system hydrogen or dust is trapped in the water fulfilling the safety function. However, the system can be designed to actively recirculate the liquid, e.g., water in the gap and continuously filtering the water, so critical concentrations of a gas, e.g., hydrogen gas are impossible.

According to an aspect, a peripheral control for a fuel cell is provided. The fuel cell is provided with an envelope to surround the fuel cell to collect leakage via the collecting fluid within the intermediate space provided by the envelope.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 shows a general scheme of a cross section through an example of a leaking substance discharging device.
Fig. 2 schematically shows a cross section through an example of a leaking substance discharging device and a fuel cell arrangement.
Fig. 3 shows an example of a system for energy supply.
Fig. 4 shows an aircraft comprising the energy supply system.
Fig. 5 shows basic steps of an example of a method for discharging a leaking substance.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

In an example, the leaking substance discharging device can be used for all fuel cell systems mobile and static. Especially where hydrogen leakages may occur, the solution provides advantages and synergies with other protection methods such as cooling systems, dust prevention, fire protection and extinguishing.

As an example, fuel cell stacks may feature a leakage rate, where hydrogen is getting into the surrounding of the fuel cell stacks. Current design trades try to deal with the leakage by removing the hydrogen with an airflow or vacuum from the stacks or allowing the hydrogen in the surrounding with an explosion proof housing. Those solutions are mostly heavy as they need a big effort in additional equipment not delivering the right amount of safety. Therefore, a second safety mechanism may be applied as well. However, solutions dealing with the hydrogen leakage are not covering e.g. dust contamination of the stack, reducing the vibrations to the stack and delivering additional cooling. All these features have to be provided by additional systems. Nevertheless, apart from fire and explosion other safety aspects like protecting the stacks from heat, dust or vibrations cannot be achieved with those measures. Additional concepts with enclosures for dust prevention and damping systems are necessary.

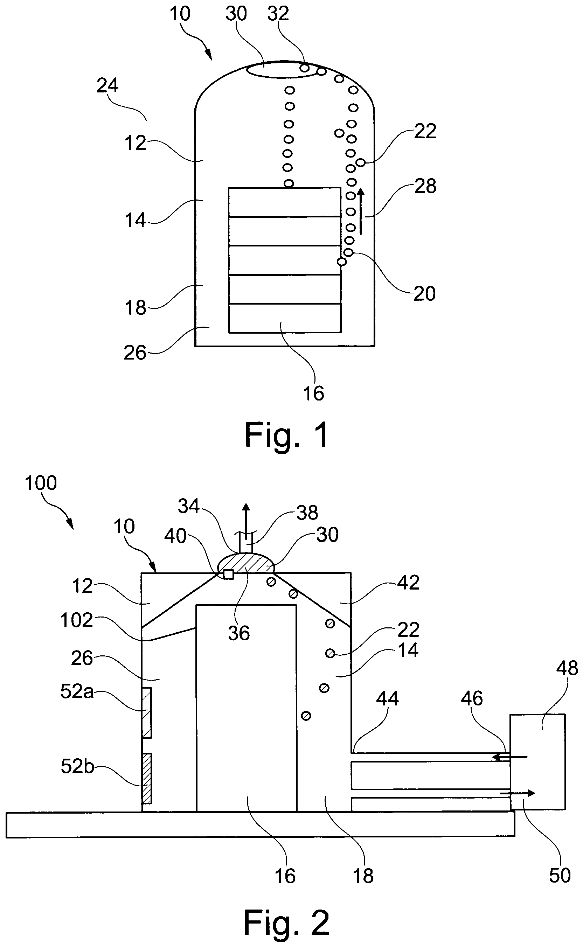

Fig. 1 shows a general scheme of a cross section through an example of a leaking substance discharging device 10. The leaking substance discharging device 10 for fuel cell operation comprises a housing 12 and a leakage collection fluid 14. The housing 12 is configured to encapsulate at least one fuel cell 16. The housing 12 encloses an intermediate space 18 at least partly surrounding the at least one fuel cell 16 when arranged within the housing 12. The intermediate space 18 is configured to receive the leakage collection fluid 14. The leakage collection fluid 14 is configured to captivate leaking substance 20, which results in a segregation of leaked substance bubbles 22 in the leakage collection fluid 14. The intermediate space 18 is also configured to collect the leaked substance bubbles 22 and to prevent leaking of the leaked substance into a surrounding 24 of the housing 12.

The term "leaking substance discharging device" relates to a conductor or a transmitter for leaked substances.

The term "fuel cell" relates to a unity that converts chemical energy into electric energy using a reducing and oxidizing substance.

In an example, the fuel cell is configured to covert the chemical energy of hydrogen to electricity.

In an example, the fuel cell is configured to covert the chemical energy of molecular hydrogen to electricity.

In an example, the fuel cell is configured to covert the chemical energy of molecular ammonia to electricity.

In an example, the fuel cell is configured to covert the chemical energy of a hydrocarbon to electricity.

In an example, the fuel cell is configured to covert the chemical energy of methane to electricity.

In an example, the fuel cell is configured to covert the chemical energy of methanol to electricity.

The term "fuel cell operation" relates to a condition where a fuel cell 16 is actively producing electric energy. The housing 12 can also be referred to as a chamber, an envelope, a compartment, a room, a balloon, a void, a bubble, or a box.

The housing 12 can also be referred to as retainer.

The housing 12 can also be referred to as enclosure.

In an example, the housing 12 in Fig. 1 is configured to store and transport a volume, comprising gases, liquids, fuel cells, fuel cell stacks, mechanical parts. The housing 12 possesses an encased or encapsulated volume, an inner lumen respectively, that is capable of storing the volume. The housing 12 is configured to separate and isolate the volume from a surrounding 24 of the housing 12 in Fig. 1.

In an example, the housing 12 can be made from any material that is configured to be gas leak-tight, pressure-proven and withstands several chemical conditions imposed by a substance in the lumen of the housing 12.

In an example, the inner surface of the lumen of the housing 12 can be covered by a protective, leak-tight layer, not shown in Fig. 1.

In an example, the housing 12 is configured to be gas leak-tight, e.g., for hydrogen gas, not shown in Fig. 1.

In an example, the housing 12 is thermally insulated, not shown in Fig. 1.

The term "fluid" relates to e.g., a liquid or a gas that continuously deforms, i.e., flows, under an applied shear stress, or external force.

The term "leakage" relates to an occurrence at the fuel cell, where the chemical energy, or electric energy contained by the fuel cell 16 in Fig. 1 is released into its environment, though it has been contained by an inner lumen of the fuel cell 16 and isolated from the environment by a shell of the fuel cell. This might occur by e.g., cracks, fractures or temperature induced deformations, connecting the inner lumen of the fuel cell 16 with the outside. Since the fuel cell 16 converts the chemical energy of small molecules, e.g., hydrogen, ammonia etc., to provide electric energy, small cracks can lead to a release of a big amount of these small molecules into the environment of the fuel cell.

The term "leakage collection fluid" relates to a fluid that is capable of being displaced and deformed by a substance, respectively molecules leaking from the fuel cell. The leakage collection fluid 14 in Fig. 1 is chemically unreactive with respect to the fuel cell, the molecules contained by the fuel cell 16 and the housing 12.

In an example, the leakage collection fluid 14 is a very dense gas with respect to the substance of the fuel cell.

In an example, the leakage collection fluid 14 is water.

In an example, the leakage collection fluid 14 is an ionic liquid.

In an example, the leakage collection fluid 14 is SF6, sulphur hexafluoride.

In an example, the leakage collection fluid 14 is a halogenated hydrocarbon.

In an example, the leakage collection fluid 14 is methyl nonafluorobutyl ether, C₄F₉OCH₃.

In an example, the leakage collection fluid 14 is configured to have a viscosity, that does not change over a wide range of temperatures, comprising -90°C to 300°C.

The term "encapsulate" relates to the structural relationship between the fuel cell 16 in Fig. 1 and the housing 12, in that the housing 12 forms a protective envelope, or cushion around the fuel cell 16 with the fuel cell 16 still being operatable by substance inside the housing 12.

The term "intermediate space" relates to the gap that is being left, between the fuel cell 16 placed inside the housing 12 and the inner surface of the housing 12 showing to the inner lumen of the housing 12 in Fig. 1.

In an example, the intermediate space 18 fully surrounds the fuel cell 16 with the fuel cell 16 having minor contact to the inner surface of the enclosure.

In an example, the fuel cell 16 is attached with its bottom side to the bottom of the enclosure in Fig. 1.

In an example, the bottom of the enclosure further comprises a mounting plate and the fuel cell 16 is attached to the mounting plate.

The term intermediate space can also be referred to as trap, collector, accumulator, interceptor, sampler, gatherer, captivating unit, director, controller, assembler, receiver.

In an example, the leakage collection fluid 14 is configured to cover the top portion of the intermediate space 18 only, not shown in Fig. 1.

The term "captivate" relates to the property of the leakage collection fluid 14 to enclose, encapsulate or seal leaking substance 20 that it receives from the fuel cell 16 but also from the surrounding 24 or the environment of the housing 12.

The term "segregation" relates to the reaction of the leakage collection fluid 14 when having captivated the leaked substance, in that the leakage collection fluid 14 does not mix or chemically react with the leaked substance or leaked molecules from the fuel cell 16 in Fig. 1. It is rather that the leakage collection fluid 14 is displaced, relocated or disposed in the intermediate space 18 filled with leakage collection fluid. 14

The leakage collection fluid 14 can also be referred to as leakage retaining fluid, leakage encapsulating fluid, leakage trapping fluid, displacement medium, substance entrapping medium, substance displacer, leakage trap, leakage disposer, leaked substance relocator, leaked substance transporter, displacer, leakage conductor, leaked substance transmitter, leaked substance retainer, relocation medium.

The term "substance" relates to the molecules as referred to above, that the fuel cell 16 of Fig. 1 uses for operation and producing electricity.

In an example, the substance comprises hydrogen.

In an example, the substance comprises molecular hydrogen.

In an example, the substance comprises molecular ammonia.

In an example, the substance comprises a hydrocarbon.

In an example, the substance comprises methane.

In an example, the substance comprises methanol.

In an example, the leakage collection fluid 14 ensures that the substance does not mix with the atmosphere of the surrounding 24 of the housing 12 in Fig. 1 to form an explosive mixture.

The term "leaked substance" relates to the substance passing the shell of the fuel cell 16 through cracks or other unintentionally induced paths from the inside of the fuel cell 16 of Fig. 1 to its outside.

The term "leaked substance bubbles" relates to portions, or voids of the leaked substance that the leakage collection fluid 14 forms in interplay with the intermediate space 18 and the fuel cell.

The term "collect" relates to a certain location of the enclosure, where a plurality of the leaked substance bubbles 22 is focused, aggregates or concentrates in Fig. 1.

The term "leaking" relates to the process of the substance passing the shell of the fuel cell.

The term "surrounding" relates to the environment of the housing 12 of Fig. 1 in its closer periphery or proximity. The term surrounding 24 relates to the environment of the housing 12 and the fuel cell, e.g., inside the vehicle or a building construction, not shown in Fig. 1, such as the internal environment, whereas the outside of the vehicle or building construction can be referred to as external environment. The environment refers to the inside spacing of e.g., the inside the vehicle or a building construction that bears the housing 12 and the fuel cell. The surrounding 24 can also be a compartment of a propulsion system.

In an example of Fig. 1, the leakage collection fluid 14 is a liquid 26 configured to make the leaking substance 20 locatable, detectable and controllable by forming the leaked substance bubbles 22. The liquid 26 has a viscosity that allows the upwards oriented transit 28 of the leaked substance bubbles 22 in the intermediate space 18 due to gravity.

The term "liquid" relates to a condition state of the leakage collection fluid 14.

The term "locatable" relates to the leaked substance immersed in the leakage collection fluid 14 but being discernible and optical recognizable by forming leaked substance bubbles 22 in Fig. 1 in the leakage collection fluid 14.

The term "detectable" relates to the leaked substance immersed in the leakage collection fluid 14 being measurable by a sensing unit.

The term "controllable" relates to relates to the leaked substance immersed in the leakage collection fluid 14 being manageable in their location and amount with respect to the fuel cell 16 and the leakage collection fluid 14.

In an example, hydrogen is a very light gas and its diffusion into the surroundings of a hydrogen consuming entity like a fuel cell 16 hardly controllable.

The term "forming" relates to the process of the leaked substance immersed in the leakage collection fluid 14 in Fig. 1 to form single portions or entities comprising leaked substance only. Rather than mixing of the leaked substance immersed in the leakage collection fluid 14, the process can be understood as the leakage collection fluid 14 being displaced by the leaking substance 20, since the viscosity of the leakage collection fluid 14 allows displacement by the leaked substance.

The term "upwards oriented" relates to the direction of transport of the leaked substance bubbles 22 in the leakage collection fluid 14 in the intermediate space 18, a also shown by the arrow 28 in Fig. 1. The term "upwards" relates to the upward side with respect to the gravity, where downwards would be closer to the center of planet earth than upwards.

The term "transit" relates to transport or diffusion of the leaked substance bubbles 22 through the leakage collection fluid 14, that is enabled by the viscosity of the leakage collection fluid 14.

In an example, the liquid 26 promotes association of the leaked substance voids to a collected amount of leaked substance in Fig. 1.

In an example, the liquid 26 prevents physical and chemical mixing of the leaked substance bubbles 22 with the leakage collection fluid 14 that would lead to a decay of the bubbles.

As an advantage, a more controllable and secure fuel cell 16 is yielded.

As a further more advantage, the liquid of the device is easy to handle.

In an example of Fig. 1, the housing 12 provides a capturing unit 30 configured to gather the leaked substance bubbles 22 from the leakage collection fluid 14 in order to collect the leaked substance from the fuel cell.

In an option of Fig. 1, the capturing unit 30 is located at the highest point 32 of the intermediate space 18 with respect to the at least one fuel cell.

The term "capturing unit" relates to a recess, a channel, a bulge, or a protrusion that is formed within the inner surface of the enclosure and is connected to the intermediate space 18. The capturing unit 30 is in fluid communication to the intermediate space 18 in Fig. 1.

In an example, the capturing unit 30 forms an intersecting channel system at the highest point of the intermediate space 18, not shown in Fig. 1.

The term "highest point" relates to position of the capturing unit 30 with respect to the intermediate space 18 and the fuel cell, where the laws of gravity transport the substance of the leaked substance bubbles 22 to as destination, since the substance has a lower density than the leakage collection fluid 14. The lower density leaked substance bubbles 22 will gather and concentrate at the capturing unit 30 and form a single collected gas unity in Fig. 1.

In an example, the leakage collection fluid 14 forms a membrane that separates the capturing unit 30 from the intermediate space 18 and that only allows passing of the leaked substance into the capturing unit 30.

As an advantage, a more efficient fuel cell 16 with lower energy loss is yielded.

Fig. 2 schematically shows a cross section through an example of a leaking substance discharging device 10. In Fig. 2, the capturing unit 30 comprises a discharge port 34 as a supply of the collected amount of leaked substance 36 to the at least one fuel cell.

In an option of Fig. 2, the discharge port 34 is configured to be connected to a substance resupply 38 for connection to at least one fuel cell.

The term "collected amount of leaked substance" relates to the leaked substance bubbles 22 that have been associated or aggregated to form a single leaked substance unity, or a larger gas bubble in the leakage collection fluid 14 in Fig. 2.

The term "discharge port" relates to an access to the collected amount of leaked substance 36 in the capturing unit 30 of Fig. 2, where it can be removed, i.e., pumped off or displaced by the leakage collection fluid 14 to recycle it in the fuel cell.

The term "substance resupply" relates to a tubing, a piping or piping system that can reintroduce the lost hydrogen to the energy production of the fuel cell, partly shown in Fig. 2.

In an example, the discharge port 34 is configured to prevent oxygen from entering the enclosure.

In an example, not shown in Fig. 2, the discharge port 34 comprises a check valve to prevent contact of the atmosphere or oxygen with the leakage collection fluid 14.

As an advantage, a more efficient fuel cell 16 with lower energy loss is yielded.

In an example of Fig. 2, the capturing unit 30 further comprises a sensor 40 for measuring the collected amount of leaked substance 36.

The term "sensor" relates to a sensing unit that allows to measure the amount of hydrogen in the capturing unit 30.

The sensor 40 in Fig. 2 might be an acoustic and/or electromagnetic and/or electric sensor.

In an example, a second sensor is deployed being a temperature sensor or the sensor 40 is a temperature sensor.

In an example, the sensor 40 and/or the second sensor might be connected to a control unit of an energy supply system, not shown in Fig. 2, that deploys the leaking substance discharging device 10. Depending on a signal of the sensor 40 and/or the second sensor, the control unit can urge the energy supply system to change its operation mode.

As an advantage, a better control over the energy supply system deploying fuel cells is yielded.

As another advantage, the device is easy to control during filling or replacement operations.

As an advantage, the filling level of the device is easy to measure, as well as potentially appearing hydrogen cavities.

In an example of Fig. 2, the housing 12 is further configured to provide a control for a transport 42 of the leaked substance to the capturing unit 30 and/or to a predetermined location in the housing 12.

The term "control for a transport" relates to structural units in the intermediate space 18, which provides contact to the leaked substance bubbles 22 in the leakage collection fluid 14 and that gives the transit of the leaked substance bubbles 22 a predetermined path to a certain destination within the intermediate space 18 in Fig. 2.

In an example, the control for a transport 42 facilitates the aggregation of a plurality of the leaked substance bubbles 22 to yield a larger leaked substance bubble.

The term "predetermined location" relates to a certain site at the enclosure that is configured to collect leaked substance, not shown in Fig. 2.

In an example, the inner surface of the intermediate space 18 and/or the fuel cell 16 and/or the capturing unit 30 are covered with a layer that prevents adhesion of leaked substance bubbles 22, not shown in Fig. 2.

In an example of Fig. 2, the housing 12 comprises at least one supply port 44 for supply 46 of leakage collection fluid 14 to the intermediate space 18 and to refill the intermediate space 18 with leakage collection fluid 14, when the leakage collection fluid 14 has been displaced by the leaking substance 20.

The term "supply port" relates to an opening that provides fluid access to the intermediate space 18 in Fig. 2.

In an example, the supply port 44 is configured to be leak-tight with respect to outer atmosphere or hydrogen.

The term "refill" relates to supply 46 the intermediate space 18 with leakage collection fluid 14 to level out leakage collection fluid 14 that has been relocated by the leaked substance in Fig. 2.

The term displaced can also be referred to as to relocated or disposed.

In an example, the capturing unit 30 is configured to discharge the collected amount of leaked substance 36 by supplying leakage collection fluid 14 via the at least one supply port 44.

In an example, more than at least one supply port 44 is provided, e.g. two, three or five supply ports.

In an example, two supply ports are provided that form a fluid recirculation loop in order to generate a stream of recirculating leakage collection fluid 14 in the intermediate space 18 by the supply 46.

In an example, the leaking substance discharging device 10 is operated without the at least one supply port 44.

In an example of Fig. 2, the housing 12 further comprises a compensation arrangement 48 providing a reservoir 50 for the leakage collection fluid 14, the reservoir 50 being in fluid communication to the intermediate space 18 via the supply port 44. The compensation arrangement 48 compensates for leakage collection fluid 14 being displaced by leaked substance.

The term "compensation arrangement" relates to an entity that can take up leakage collection fluid 14 from the intermediate space 18 that underwent displacement by leaking substance 20 and, vice versa, it can resupply displaced leakage collection fluid 14, when leaked substance is removed from the intermediate space 18.

In an example, the compensation arrangement 48 comprises a mechanically modifiable volume to displace leakage collection fluid 14 in the intermediate space 18, not shown in Fig. 2.

The term "reservoir" relates to an entity with an inner lumen that is capable to receive leakage collection fluid 14 outside the intermediate space 18.

In an example, the intermediate space 18 of Fig. 2 is configured to be set under different pressures by the leakage collection fluid 14. An overpressure blocks substance at leaks of the fuel cell 16 from entering the intermediate space 18. The overpressure blocks an atmosphere of the surroundings from entering the intermediate space 18 through the housing 12. An underpressure separates residual leaked substance from the leakage collection fluid 14.

As an advantage, recirculation of water, as the liquid, or fully closed volume, as the intermediate space 18, is possible.

In an example of Fig. 2, the housing 12 provides at least one temperature control element 52a, 52b for cooling and/or heating. The at least one temperature control element 52a, 52b is configured to heat and/or cool the at least one fuel cell 16 via the leakage collection fluid 14.

The term temperature control element can also be referred to as heating or cooling element or cooling or heating.

The term "temperature control element" relates to an entity that is capable of exchanging radiation or convection heat with the leakage collection fluid 14, such that the temperature generated in the leakage collection fluid 14 is transferred to the fuel cell 16 or fuel cell stacks in Fig. 2.

It has to be noted that the positions of the at least one temperature control element 52a, 52b, the supply port 44, the reservoir 50 and the control for a transport 42 are chosen due to reasons of clarity and visibility of Fig. 2 and not primarily due to constructional reasons. However, there are also other ways to connect the afore mentioned components to the housing 12, respectively the intermediate space 18.

In an example, the at least one temperature control element 52a, 52b is located outside the housing 12.

In an example, the at least one temperature control element 52a, 52b is located at the reservoir 50. In an example, the at least one temperature control element 52a, 52b is located at the supply port 44.

In an example, the at least one temperature control element 52a, 52b is located at the supply 46 of leakage collection fluid 14 to the intermediate space 18.

In an example, the at least one temperature control element 52a, 52b is located at the mounting plate at the bottom of the housing 12.

In an example, the at least one temperature control element 52a, 52b is located at a fluid recirculation loop to generate a stream of heated or cooled recirculating leakage collection fluid 14 in the intermediate space 18.

In an example, the at least one temperature control element 52a, 52b controls the temperature of the leakage collection fluid 14 via radiation from outside the housing 12.

In an example, the at least one temperature control element 52a, 52b is another functional part in the surrounding of the leaking substance discharging device 10.

In an example, the at least one supply port 44 at the housing 12 is configured to provide for a circulation of the leakage collection fluid 14 in the intermediate space 18. The circulation of the leakage collection fluid 14 is configured for heating and/or cooling of the at least one fuel cell. In an example, not shown in Fig.2, the leakage collection fluid 14 comprises volume displacement bodies or structures arranged in the intermediate space 18. The volume displacement bodies are coverable and contactable with the leakage collection fluid 14. The volume displacement bodies are impenetrable with respect to the leaking substance 20. The volume displacement bodies are filling out the intermediate space 18 to displace the leakage collection fluid 14.

In an example, the volume displacement structures, not shown in Fig. 2, are filling out the intermediate space 18 to an upper level of the fuel cell, until which a layer of leakage collection fluid 14 covers the upper surface of the fuel cell 16 and separates it from the capturing unit 30.

As an advantage, synergies with adjacent functions and systems of the device are possible such as cooling of the stack, preheating of the stack in cold environments, stabilization of the temperature environment, preheating the stack by water heating, full temperature control.

As an advantage, the fuel cell 16 can be operated independently from the environmental conditions of the surroundings.

As an advantage, the heating can separate residual leaked substance from the leakage collection fluid 14.

In an example of Fig. 2, the leakage collection fluid 14 in the intermediate space 18 is configured to damp vibrations with respect to the at least one fuel cell.

The term "damp vibrations" relates to the property of the liquid 26 that it slows down the frequency and reduces the amplitudes of vibrations the fuel cell 16 would be exposed to without being immersed in the leakage collection fluid 14. In consequence the appearance of motion induced leaks at the fuel cell 16 is mitigated.

In an example, not shown in Fig. 2, the fuel cell is not mounted to a mounting plate or the bottom of the housing 12, it is rather floating in the intermediate space 18, or mounted by elastic support posts to the bottom of the housing 12.

As an advantage, a more robust fuel cell 16 is yielded.

As an advantage, the device covers a plurality of harmful challenges when controlling fuel cells: Mechanical, chemical, electrical.

In an example of Fig. 2, the leakage collection fluid 14 is configured to extinguish a fire at the at least one fuel cell 16.

The term "fire" relates to the fuel cell 16 having an occurrence of a chemical reaction of the substance at the fuel cell.

In an example, the leakage collection fluid 14 provides a low solubility of oxygen in Fig. 2.

In an example, the leakage collection fluid 14 prevents undesired access of oxygen to the fuel cell 16 and the substance of the fuel cell 16.

In an example, the leakage collection can extinguish fires in the surrounding 24 of the housing 12 in Fig. 2.

As an advantage, a more secure operation of the fuel cell 16 can be executed.

As an advantage, fire at the device can be extinguished by the liquid and potential harmful effects due to heat are minimized.

As an advantage, an activation may be possible, but is not necessary for the safety effect.

Fig. 2 also schematically shows a cross section through an example of a fuel cell arrangement 100. The fuel cell arrangement 100 comprises at least one fuel cell 102 and a leaking substance discharging device 10 according to one of the previous examples and options. The leaking substance discharging device 10 encloses the at least one fuel cell 102 and captures leaking substance 20 from the enclosed at least one fuel cell 102.

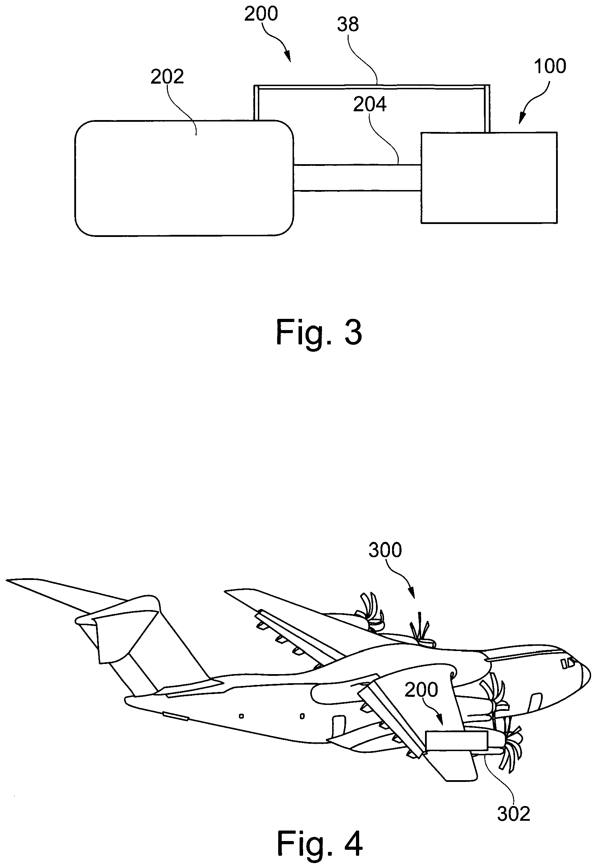

The term "encloses" relates to the fuel cell 102 being covered, sealed and enclosed by the housing 12 but still being operatable from outside the housing 12, not shown in Fig. 3.

In an example, the fuel cell 102 is supplied by a substance via supply ports at the housing 12.

In an example, a substance resupply 38 is provided in Fig. 3, connecting a discharge port 34 of the leaking substance discharging device 10 to the at least one fuel cell. The substance resupply 38 supplies the at least one fuel cell 102 with a collected amount of leaking substance 20.

In an example, the substance resupply 38 is configured to supply other parts of an energy supply system, not shown in Fig. 3 with the collected amount of leaking substance, i.e., to heat-up cryogenic hydrogen.

Fig. 3 shows an example of a system for energy supply 200. The energy supply system 200 comprises at least one fuel cell arrangement 100 according to the previous examples and a substance reservoir 202. The substance reservoir 202 is connected to the at least one fuel cell arrangement 100 via substance supplies 204. The substance supplies 204 are connecting the substance reservoir 202 to the at least one fuel cell arrangement 100 to supply the substance to the at least one fuel cell arrangement 100. The at least one fuel cell arrangement 100 is configured to provide electric energy to power consuming loads.

In an example, the energy supply system comprises at least one power consuming load.

In an example, the energy supply system is configured to power other devices or applications than an aircraft.

In an example, the energy supply system powers a ground vehicle.

In an example, the energy supply system powers a boat.

In an example, the energy supply system powers a submarine.

In an example, the energy supply system powers a spaceship or space station.

In an example, the energy supply system powers stationary applications. Fig. 4 shows an aircraft 300 comprising the energy supply system. The aircraft 300 comprises at least one energy supply system 200 according to the previous example and a propulsion system 302. The propulsion system is powered by the at least one energy supply system.

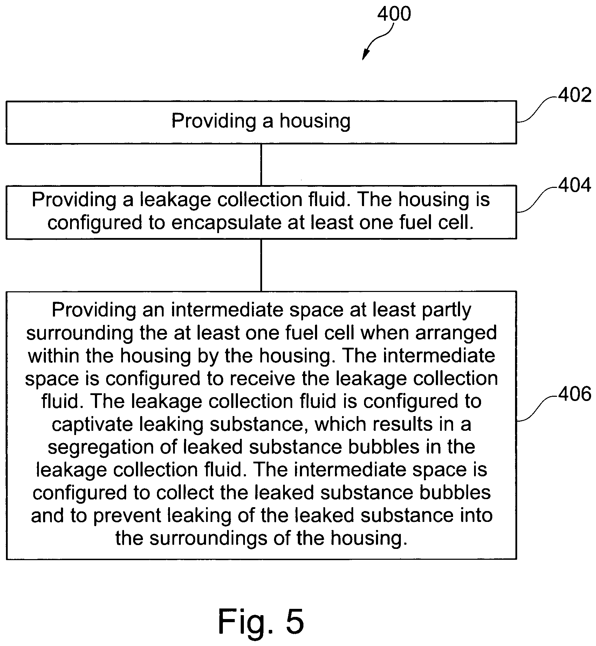

Fig. 5 shows basic steps of an example of a method 400 for discharging a leaking substance 20. The method 400 comprises the following steps:
- In a first step 402, a housing 12 is provided,
- In a second step 404, a leakage collection fluid 14 is provided. The housing 12 is configured to encapsulate at least one fuel cell, and
- In a third step 406, an intermediate space 18 at least partly surrounding the at least one fuel cell 16when arranged within the housing 12 is provided by the housing 12. The intermediate space 18 is configured to receive the leakage collection fluid 14. The leakage collection fluid 14 is configured to captivate leaking substance 20, which results in a segregation of leaked substance bubbles 22 in the leakage collection fluid 14. The intermediate space 18 is configured to collect the leaked substance bubbles 22 and to prevent leaking of the leaked substance into the surroundings of the housing 12.

In an example of the method, a conventional fuel cell is retrofitted with the housing 12.

In an example of the method, the housing 12 is used to test the operation of fuel cells.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A leaking substance discharging device (10) for fuel cell operation, comprising:
- a housing (12); and
- a leakage collection fluid (14);
wherein the housing is configured to encapsulate at least one fuel cell (16);
wherein the housing encloses an intermediate space (18) at least partly surrounding the at least one fuel cell when arranged within the housing;
wherein the intermediate space is configured to receive the leakage collection fluid;
wherein the leakage collection fluid is configured to captivate leaking substance (20), which results in a segregation of leaked substance bubbles (22) in the leakage collection fluid; and
wherein the intermediate space is also configured to collect the leaked substance bubbles and to prevent leaking of the leaked substance into a surrounding (24) of the housing.

2. Device according to claim 1, wherein the leakage collection fluid is a liquid (26) configured to make the leaking substance locatable, detectable and controllable by forming the leaked substance bubbles; and
wherein the liquid has a viscosity that allows the upwards oriented transit (28) of the leaked substance bubbles in the intermediate space due to gravity.

3. Device according to claim 1 or 2, wherein the housing provides a capturing unit (30) configured to gather the leaked substance bubbles from the leakage collection fluid in order to collect the leaked substance from the fuel cell; and
wherein the capturing unit is located at the highest point (32) of the intermediate space with respect to the at least one fuel cell.

4. Device according to claim 1, 2 or 3, wherein the capturing unit comprises a discharge port (34) as a supply of the collected amount of leaked substance (36) to the at least one fuel cell; and
wherein the discharge port is configured to be connected to a substance resupply (38) for connection to at least one fuel cell.

5. Device according to one of the preceding claims, wherein the capturing unit further comprises a sensor (40) for measuring the collected amount of leaked substance.

6. Device according to one of the preceding claims, wherein the housing is further configured to provide a control for a transport (42) of the leaked substance to the capturing unit and/or to a predetermined location in the housing.

7. Device according to one of the preceding claims, wherein the housing comprises at least one supply port (44) for supply (46) of leakage collection fluid to the intermediate space and to refill the intermediate space with leakage collection fluid, when the leakage collection fluid has been displaced by the leaking substance.

8. Device according to one of the preceding claims, wherein the housing further comprises a compensation arrangement (48) providing a reservoir (50) for the leakage collection fluid, the reservoir being in fluid communication to the intermediate space via the supply port; and
wherein the compensation arrangement compensates for leakage collection fluid being displaced by leaked substance.

9. Device according to one of the preceding claims, wherein the housing provides at least one temperature control element (52a, 52b) for cooling and/or heating; and
wherein the at least one temperature control element is configured to heat and/or cool the at least one fuel cell via the leakage collection fluid.

10. Device according to one of the preceding claims, wherein the leakage collection fluid in the intermediate space is configured to damp vibrations with respect to the at least one fuel cell.

11. Device according to one of the preceding claims, wherein the leakage collection fluid is configured to extinguish a fire at the at least one fuel cell.

12. A fuel cell arrangement (100), comprising:
- at least one fuel cell (102);
- a leaking substance discharging device (10) according to one of the preceding claims;
wherein the leaking substance discharging device encloses the at least one fuel cell and captures leaking substance from the enclosed at least one fuel cell.

13. An energy supply system (200), comprising:
- at least one fuel cell arrangement (100) according to claim 12; and
- a substance reservoir (202);
wherein the substance reservoir is connected to the at least one fuel cell arrangement via substance supplies (204);
wherein the substance supplies are connecting the substance reservoir to the at least one fuel cell arrangement to supply the substance to the at least one fuel cell arrangement; and
wherein the at least one fuel cell arrangement is configured to provide electric energy to power consuming loads.

14. An aircraft (300), comprising:
- at least one energy supply system (200) according to claim 13; and
- a propulsion system (302);
wherein the propulsion system is powered by the at least one energy supply system.

15. A method (400) for discharging a leaking substance, comprising the following steps:
- Providing (402) a housing;
- Providing (404) a leakage collection fluid;
wherein the housing is configured to encapsulate at least one fuel cell; and
- Providing (406) an intermediate space at least partly surrounding the at least one fuel cell when arranged within the housing by the housing;
wherein the intermediate space is configured to receive the leakage collection fluid;
wherein the leakage collection fluid is configured to captivate leaking substance, which results in a segregation of leaked substance bubbles in the leakage collection fluid; and
wherein the intermediate space is configured to collect the leaked substance bubbles and to prevent leaking of the leaked substance into the surroundings of the housing.
